# EUROPEAN PATENT APPLICATION

(11) **EP 4 794 131 A2**
(43) Date of publication of application: **19.08.2026**
(21) Application number: 26153787.2
(22) Date of filing: 23.01.2026
(51) Int. Cl.: H01R 13/424, H01R 13/52

(54) **ELECTRICAL CONNECTOR**

(30) Priority: 23.01.2025 CN 202510106587
(71) Applicant: Aptiv Connection Systems (Nantong) Ltd., Nantong, Jiangsu 226300 (CN); Aptiv Electrical Centers (Shanghai) Co., Ltd., Shanghai 200184 (CN)
(72) Inventor: TIAN, Xiaoxian, Shanghai (CN)
(74) Representative: Bardehle Pagenberg Partnerschaft mbB Patentanwälte Rechtsanwälte

(57) **Abstract**

According to this disclosure, an electrical connector is proposed. The electrical connector comprises: a main housing comprising an outer shell and a terminal receiving structure formed in the outer shell, wherein the terminal receiving structure comprises a terminal channel; and a terminal locking member for installation onto the main housing to provide enhanced locking of the terminal within the terminal channel, wherein the terminal locking member and the main housing can be connected between the pre-locking position and the final-locking position.

## Description

### Technical Field

This application belongs to the field of connector technology, particularly, relates to electrical connectors used in automotive electrical and electronic architecture.

### Background Technology

Coaxial connectors are often used as signal connectors in automotive electrical and electronic architectures. A common coaxial connector includes an outer housing, terminal locking component, connector locking components (CPA device), etc. This type of terminal locking component is usually an independent device separate from the outer housing. In the delivery state, the terminal locking component is transported together with the outer housing but not assembled together. The terminal locking component is to be assembled with the outer housing by the end user.

If the terminal locking component mentioned above is not installed into the outer housing, or assembled at a wrong position, it will result in insufficient locking force of the connector, leading to connection failure. Therefore, there is still a need for further improvement in the locking performance and user experience of terminal locking components.

### Summary of Invention

The present application aims to provide an electrical connector with terminal locking member which enhances locking performance and user experience.

According to one aspect of this application, an electrical connector is proposed. The electrical connect comprises: a main housing comprising an outer shell and a terminal receiving structure formed in the outer shell, wherein the terminal receiving structure comprises a terminal channel; and a terminal locking member for installation onto the main housing to provide enhanced locking of the terminal within the terminal channel,
wherein, the terminal locking member and the main housing can be connected between the pre-locking position and the final-locking position.

In the above solution of electrical connector, as an optional implementation, the terminal receiving structure comprises a sleeve shaped front portion, and the terminal locking member has a sleeve shaped body for sleeving onto the sleeve shaped front portion of the terminal receiving structure.

In the above solution of electrical connector, as an optional implementation, the terminal receiving structure comprises an annular wall, and a terminal clamping arm is formed on the annular wall, wherein the terminal clamping arm is to clamp into a positioning groove on the sleeve shaped front portion of the terminal receiving structure.

In the above solution of electrical connector, as an optional implementation, the positioning groove on the sleeve shaped front portion of the terminal receiving structure comprises a first locking groove corresponding to the pre-locking position and a second locking groove corresponding to the final-locking position.

In the above solution of electrical connector, as an optional implementation, the first locking groove is closer to the front end of the main housing than the second locking groove.

In the above solution of electrical connector, as an optional implementation, when the terminal locking member and the main housing are connected in the pre-locking position, a part of the terminal locking member protrudes outside the main housing, so that the electrical connector cannot be connected to a mating connector.

In the above solution of electrical connector, as an optional implementation, when the terminal locking member and the main housing are connected in the final-locking position, the terminal locking member does not interfere with the connection between the electrical connector and the mating connector.

In the above solution of electrical connector, as an optional implementation, a stop protrusion is formed on the inner wall of the terminal channel of the terminal receiving structure.

In the above solution of electrical connector, as an optional implementation, further comprising an one-piece integrated seal, wherein the seal comprises a rear sealing ring, a front sealing ring, and a connecting rod connecting the two.

In the above solution of electrical connector, as an optional implementation, the outer shell of the main housing defines a rear cavity and a front cavity, wherein the rear cavity is in communication with the terminal channel in the terminal receiving structure, and the rear cavity is to accommodate the rear sealing ring of the seal, and the front cavity surrounds the sleeve shaped front portion of the terminal receiving structure.

In the above solution of electrical connector, as an optional implementation, the seal and the main housing are formed into an inseparable assembly through a co-molding process.

### Brief description of the drawings

In order to provide a clearer explanation for the technical solution in the embodiments of the present application, a brief introduction will be given to the drawings required for the description of the embodiments. It is apparent that the drawings described below are only some embodiments of the present application. For those skilled in the art, other drawings can be obtained based on these drawings without creative labor.
Figure 1 is an exploded view of an electrical connector according to an embodiment of the present application.
Figure 2 is a front view of the main housing of the electrical connector according to an embodiment of the present application.
Figure 3 is a rear view of the main housing of the electrical connector according to an embodiment of the present application.
Figure 4 is a longitudinal sectional view of the main housing of the electrical connector according to an embodiment of the present application.
Figure 5 is a view of the seal in the electrical connector according to an embodiment of the present application.
Figure 6 is a view of a terminal locking member in an electrical connector according to an embodiment of the present application.
Figure 7 shows a longitudinal sectional view of the electrical connector (without terminals inserted), and Figure 8 illustrates the details of the area marked by the box in Figure 7.
Figure 9 shows a longitudinal sectional view of the electrical connector (insert terminal), with the section of Figure 9 being perpendicular to the section of Figure 7.

### Embodiments

The following will provide a clear and complete description of the technical solution in the embodiments of the present application, in conjunction with the accompanying drawings. Obviously, the described embodiments are only a part of the embodiments of the present application, not all of them. Based on the embodiments in this application, all other embodiments obtained by those skilled in the art without creative labor are within the scope of protection of this application.

In the description of this application, it should be noted that unless otherwise specified and limited, the terms "connected" and "connected" should be broadly understood, for example, they can be fixed connections, detachable connections, or integrated connections; It can be a mechanical connection, an electrical connection, or communication with each other; It can be directly connected or indirectly connected through an intermediate medium, and it can be a connection within two components or an interaction relationship between two components. For ordinary technical personnel in this field, the specific meanings of the above terms in this application can be understood according to the specific situation. In the description of this application, the meaning of "multiple" refers to two or more, unless otherwise specifically limited. In addition, the terms "first" and "second" are only used for descriptive purposes and cannot be understood as indicating or implying relative importance or implying the number of technical features indicated. Thus, the features limited to "first" and "second" may explicitly or implicitly include one or more features.

The following disclosure provides many different implementation methods or examples to achieve different structures of the present application. In order to simplify the disclosure of this application, specific examples of components and settings are described below. Of course, they are only examples and are not intended to limit the scope of this application.

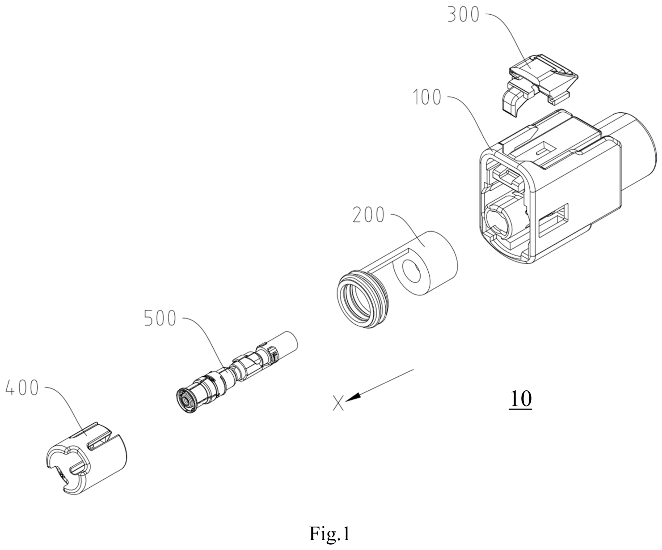

Figure 1 shows an exploded view of an electrical connector 10 according to an embodiment of the present application. As shown in Figure 1, the electrical connector 10 comprises a main housing 100, a seal 200, a terminal locking member 400, a connector locking component 300, and a terminal assembly 500 installed in the main housing 100. It can be understood that depending on the design requirements and the required locking force, connector locking component 300 is an optional part.

It can be understood that the terminal locking member is also referred to as the terminal primary lock reinforcement mechanism, or simply PLR.

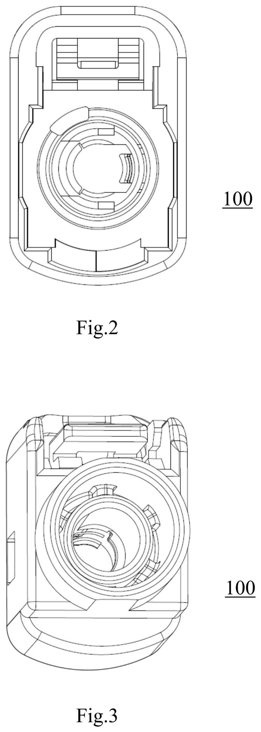

In Figure 1, the direction indicated by the arrow X is the direction in which the electrical connector 10 is used for insertion, which can be referred to as the front end or mating end of the electrical connector 10, and the opposite end can be referred to as the rear end or wiring end of the electrical connector 10. Figure 2 shows a view of the front end of the main housing 100 of the electrical connector 10, and Figure 3 shows a view of the rear end of the main housing 100 of the electrical connector 10.

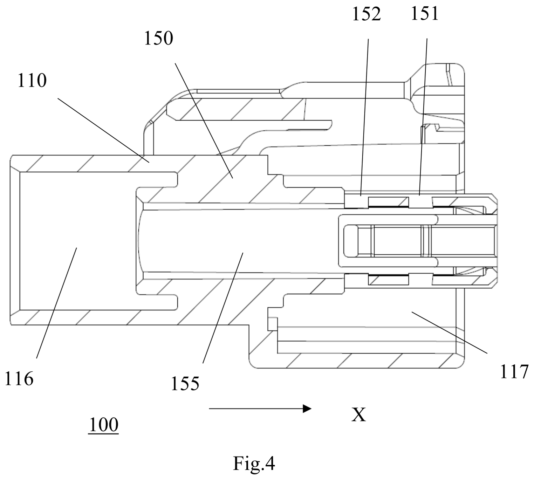

Figure 4 shows a longitudinal sectional view of the main housing 100 of the electrical connector 10. As shown in Figure 4, the main housing 100 includes an outer shell 110 and a terminal receiving structure 150 formed in the outer shell 110. The terminal receiving structure 150 includes a terminal channel 155 that runs through the front and rear, the terminal channel 155 is to receive the terminal assembly 500 and position the terminal in the channel.

The outer shell 110 of the main housing 100 defines a rear cavity 116 and a front cavity 117. Wherein the rear cavity 116 is connected to the terminal channel 155 in the terminal receiving structure 150, and the rear cavity 116 is used to accommodate the rear sealing ring of the seal 200 (further described below). The front cavity 117 surrounds the sleeve shaped front portion of the terminal receiving structure 150.

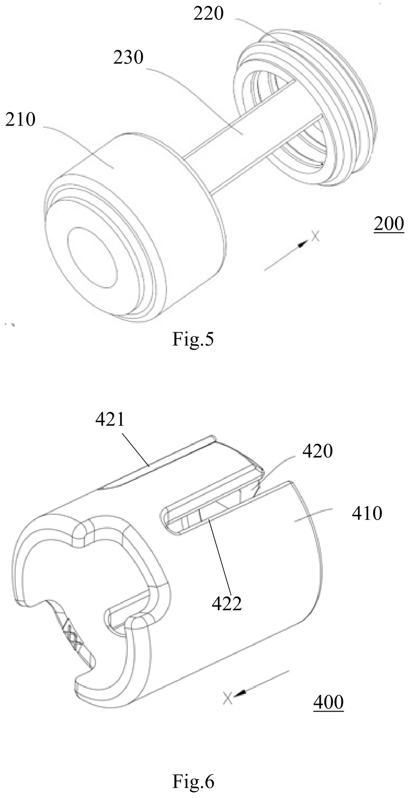

Figure 5 shows a perspective view of a seal 200. As shown in Figure 5, the seal 200 is an integrated one-piece part, which includes a rear sealing ring 210 and a front sealing ring 220, as well as a connecting rod 230 connecting the two sealing rings. The rear sealing ring 210 is used to be inserted into the rear cavity 116 of the outer shell 110 of the main housing 100. The front sealing ring 220 is used to sleeve onto the sleeve shaped front portion of the terminal receiving structure 150.

Furthermore, the seal 200 and the main housing 100 are formed through a co-molding process, thereby creating an inseparable assembly.

Figure 6 shows a perspective view of terminal locking member 400. The terminal locking member 400 is used for installation onto the main housing 100, more specifically, onto the terminal receiving structure 150 of the main housing, thereby providing enhanced locking of the terminal within the main housing 100. The terminal locking member 400 is also referred to as the primary lock reinforcement mechanism, or simply PLR, in certain situations. As shown in Figure 6, the terminal locking member 400 includes a sleeve shaped body 410. The sleeve shaped body 410 includes a generally annular wall, and is formed on the annular wall at the terminal clamping arm 420. One end of the terminal clamping arm 420 is connected to the annular wall of the sleeve shaped body 410, and the left and right sides of the terminal clamping arm 420 are separated from the annular wall by two slits 421 and 422.

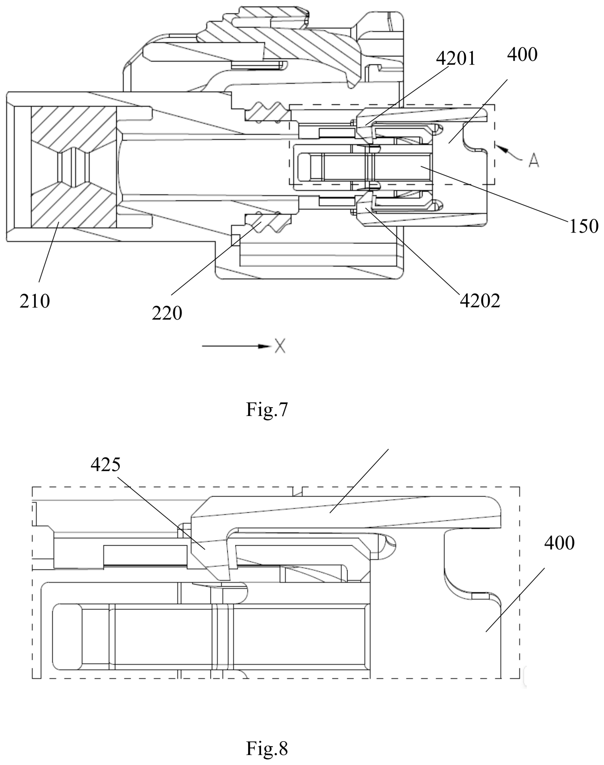

Although obscured in Figure 6, it can be seen from Figure 7 that the terminal clamping arms 420 can be in plural. For example, in Figure 7, terminal clamping arm 4201 and terminal clamping arm 4202 are shown to be arranged opposite to each other.

Figure 7 shows a longitudinal sectional view of electrical connector 10 (without terminal inserted therein), and Figure 8 illustrates the details of the area marked by box A in Figure 7. As shown in Figures 7 and 8, the rear sealing ring 210 and front sealing ring 220 of seal 200 are located in the rear cavity 116 and front cavity 117 of the main housing 100, respectively. The terminal locking member 400 is used to install onto the sleeve shaped front part of the terminal receiving structure 150. At the free end of the terminal clamping arm 420 on the terminal locking member 400, there is a locking protrusion 425 facing the terminal channel. When the terminal locking member 400 is installed in place, the locking protrusion 425 at least partially enters the terminal channel, thereby applying locking to the terminal assembly in the terminal channel.

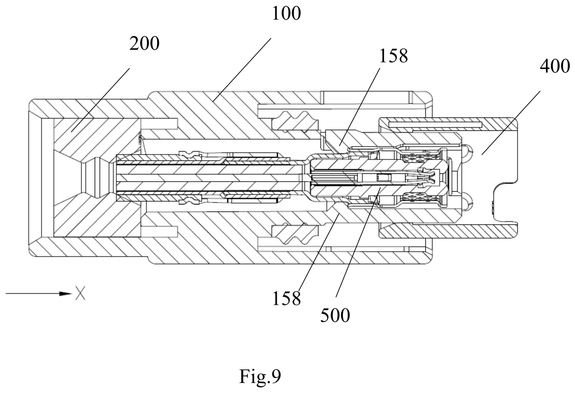

Figure 9 shows a longitudinal sectional view of the electrical connector 10 (with a terminal inserted therein). The cross-section in Figure 9 is perpendicular to the cross-section in Figure 7. Referring to Figure 9, there are a pair of anti-retraction protrusions 158 on the inner wall of the terminal channel to prevent the terminal 500 from retracting.

Referring further to Figures 4 and 7, a first locking groove 151 and a second locking groove 152 are formed in the sleeve shaped front portion of the terminal receiving structure 150. The first locking groove 151 is used to cooperate with the locking protrusion 425 of the terminal clamping arm 420, forming the pre-locking relationship shown in Figure 7. The second locking groove 152 is used to cooperate with the locking protrusion 425 of the terminal clamping arm 420 to form a final-locking relationship. It can be understood that when the terminal locking member 400 is in the pre-lock position, a considerable part of the terminal locking member 400 protrudes outside the main housing 100, so the connector 10 cannot be plugged into a mating connector. When the terminal locking member 400 moves to the final-locking position, the terminal locking member 400 further enters into the inner space of the main housing 100, so the connector 10 can be connected with a mating connector.

As described above, in the embodiments of the present application, the terminal locking member 400 and the main housing 100 of the connector 10 have two connection positions, which are pre-locking position and final-locking position, and the locking groove structure for achieving pre-locking and final-locking are formed in the internal space of the main housing 100. Providing pre-locking can prevent the loss and ignorance of terminal locking member 400, improving the user experience. At the same time, in the pre-locked state, connector 10 cannot be connected with a mating connector, so the user can be prompted to push terminal locking member 400 into the final-locking position to ensure enhanced locking.

The above provides a detailed introduction to a connector provided in the embodiments of the present application. Specific examples are applied in the present application to explain the principles and implementation methods of the present application. The above embodiments are only used to help understand the technical solution and core idea of the present application; Ordinary technical personnel in this field should understand that they can still modify the technical solutions described in the aforementioned embodiments, or equivalently replace some of the technical features; And these modifications or substitutions do not deviate from the essence of the corresponding technical solutions from the scope of the technical solutions of the various embodiments of the present application.

## Claims

1. An electrical connector comprising:
a main housing (100) comprising an outer shell (110) and a terminal receiving structure (150) formed in the outer shell (110), wherein the terminal receiving structure (150) comprises a terminal channel; and
a terminal locking member (400) for installation onto the main housing (100) to provide enhanced locking of the terminal within the terminal channel,
wherein, the terminal locking member (400) and the main housing (100) can be connected between the pre-locking position and the final-locking position.

2. The electrical connector as claimed in claim 1, **characterized in that** the terminal receiving structure (150) comprises a sleeve shaped front portion, and the terminal locking member (400) has a sleeve shaped body (410) for sleeving onto the sleeve shaped front portion of the terminal receiving structure (150).

3. The electrical connector as claimed in claim 2, **characterized in that** the terminal receiving structure (150) comprises an annular wall, and a terminal clamping arm (420) is formed on the annular wall, wherein the terminal clamping arm (420) is to clamp into a positioning groove on the sleeve shaped front portion of the terminal receiving structure (150).

4. The electrical connector according to claim 3, **characterized in that** the positioning groove on the sleeve shaped front portion of the terminal receiving structure (150) comprises a first locking groove (151) corresponding to the pre-locking position and a second locking groove (152) corresponding to the final-locking position.

5. The electrical connector according to claim 4, **characterized in that** the first locking groove (151) is closer to the front end of the main housing (100) than the second locking groove (152).

6. The electrical connector according to any one of the preceding claims, **characterized in that** when the terminal locking member (400) and the main housing (100) are connected in the pre-locking position, a part of the terminal locking member (400) protrudes outside the main housing (100), so that the electrical connector cannot be connected to a mating connector.

7. The electrical connector according to any one of the preceding claims, **characterized in that** when the terminal locking member (400) and the main housing (100) are connected in the final-locking position, the terminal locking member (400) does not interfere with the connection between the electrical connector and the mating connector.

8. The electrical connector according to any one of the preceding claims, **characterized in that** a stop protrusion (158) is formed on the inner wall of the terminal channel of the terminal receiving structure (150).

9. The electrical connector according to any one of the preceding claims, further comprising an one-piece integrated seal (200), wherein the seal (200) comprises a rear sealing ring (210), a front sealing ring (220), and a connecting rod (230) connecting the two.

10. The electrical connector according to claim 9, **characterized in that** the outer shell (110) of the main housing (100) defines a rear cavity (116) and a front cavity (117), wherein the rear cavity is in communication with the terminal channel in the terminal receiving structure, and the rear cavity is to accommodate the rear sealing ring of the seal, and the front cavity surrounds the sleeve shaped front portion of the terminal receiving structure.

11. The electrical connector according to claim 9 or 10, **characterized in that** the seal (200) and the main housing (100) are formed into an inseparable assembly through a co-molding process.
